# EUROPEAN PATENT APPLICATION

(11) **EP 2 207 385 A1**
(43) Date of publication of application: **14.07.2010**
(21) Application number: 09305025.0
(22) Date of filing: 12.01.2009
(51) Int. Cl.: H04W 40/12

(54) **Method for establishing end-to-end connection through an ad-hoc radio network, and corresponding device**

(71) Applicant: Alcatel Lucent, 75008 Paris (FR)
(72) Inventor: Mathieu, Christophe, 91620 Nozay (FR); Brouet, Jérôme, 75008 Paris (FR)
(74) Representative: Nicolle, Olivier

(57) **Abstract**

A method is intended for establishing an end-to-end connection between first (T1) and second (T2) radio communication equipments for a service defined by chosen QoS requirements, through an ad-hoc radio network comprising radio nodes (N1-N4) having routing capabilities and radio access capabilities. This method comprises the steps consisting, when a first radio node (N1) receives a request from the first radio communication equipment (T1), requesting this end-to-end connection, in i) transmitting a message comprising parameters representative of the chosen service QoS requirements from the first radio node (N1) to its neighbouring radio nodes (N2, N3), then from these neighbouring radio nodes to their respective neighbouring radio nodes (N4) till reaching a second radio node (N4) offering access to the second radio communication equipment (T2), by means of an on-demand routing protocol, in order to determine if radio resources adapted to these parameters are available on each radio link existing between these radio nodes (N1-N4), ii) defining a route between the first (N1) and second (N4) radio nodes through the radio nodes (N2, N3) offering radio links with radio resources adapted to the parameters, and iii) establishing the end-to-end connection between said first (T1) and second (T2) radio communication equipments through the radio nodes of the defined route.

## Description

The present invention relates to ad-hoc radio networks, and more precisely to establishment of end-to-end connections between radio communication equipments through an ad-hoc radio network.

One means here by "ad-hoc radio network" any type of radio network comprising autonomous radio nodes having both routing capabilities (L3) and radio access capabilities (L2) and having to discover by themselves the network topology through broadcasted messages announcing their presence. So, it may be a WiMAX network or a LTE network ("Long Term Evolution network", i.e. a 4G mobile), for instance.

As it is known by the man skilled in the art, in some circumstances it is important to be able to quickly ensure for a critical service through establishment of an ad-hoc path in line with the quality of service (QoS) requirements of this service, notably in terms of bandwidth, delay and jitter.

For this purpose, it has been proposed to combine a resource reservation protocol (RSVP for instance) with a non ad-hoc routing protocol (OSPF like for instance). Such a solution requires a permanent update of all the radio nodes with each radio link capacity of the whole ad-hoc radio network, which consumes bandwidth for establishing and maintaining routes over the entire backhaul network, and therefore can be critical for some applications. Moreover the L3 routers of the radio nodes cannot properly estimate the radio link status because they are not capable of retrieving the usage of the bandwidth according to the class of service. More, the self-indication by the radio nodes of the current bandwidth allocation requires strong modifications in their radio access elements (which offer the radio access capabilities (L2) - for instance the base stations).

Therefore the object of this invention is to improve the situation.

For this purpose, the invention provides for a method, intended for establishing an end-to-end connection between radio communication equipments through an ad-hoc radio network comprising radio nodes having routing capabilities and radio access capabilities, and comprising the following steps when a first one of these radio nodes receives a request from a first radio communication equipment, requesting an end-to-end connection for a service defined by chosen QoS requirements with a second radio communication equipment accessible through a second radio node:
i) of transmitting a message comprising parameters representative of the chosen service QoS requirements from the first radio node to its neighbouring radio nodes located between the first and second radio nodes, then from these neighbouring radio nodes to their respective neighbouring radio nodes till reaching the second radio node, by means of an on-demand routing protocol, in order to determine if radio resources adapted to these parameters are available on each radio link existing between these radio nodes,
ii) of defining a route between the first and second radio nodes through the radio nodes offering radio links with radio resources adapted to the parameters, and
iii) of establishing the end-to-end connection between the first and second radio communication equipments through the radio nodes of the defined route.

The method according to the invention may include additional characteristics considered separately or combined, and notably:
- the messages to be transmitted may comprise a first dedicated field comprising the parameters representative of the chosen service QoS requirements requested for the end-to-end connection;
- the messages to be transmitted may comprise a second dedicated field comprising a value representative of a local downstream radio link usage ratio;
- the message to be transmitted may be intended for requesting from the receiving radio node the creation of a dummy service with the parameters it comprises in order to determine its local radio resource availability near its radio access capabilities, without service implementation;
- when a radio node having received a message from an other radio node has available radio resources adapted to the parameters contained into this message, it may transmit a response to this other radio node by means of the on-demand routing protocol, in order to inform it that it is ready to participate to a new route, and when a radio node having received a message from an other radio node does not have available radio resources adapted to the parameters contained into this message, it may not answer to the message transmitted by this other radio node;
   ➢ when a radio node has received a response to its message concerning a service with chosen QoS requirements from a neighbouring radio node, it may request the creation of this service with the corresponding chosen QoS requirements from its radio access capabilities;
- when at least two routes have been defined to establish the end-to-end connection for the service, a load balancing of this service may be carried out between these defined routes.

The invention also provides for a device, intended for equipping a radio node having a routing means and a radio access means and belonging to an ad-hoc radio network, and arranged:
- when its radio node receives a request from a first radio communication equipment, requesting an end-to-end connection for a service defined by chosen QoS requirements with a second radio communication equipment accessible through an other radio node of the ad-hoc radio network, for ordering to the radio access means of its radio node to transmit a message comprising parameters representative of the chosen service QoS requirements to its neighbouring radio nodes, by means of an on-demand routing protocol, in order to determine if radio resources adapted to these parameters are available on each radio link existing between these radio nodes,and
- when its radio node has received a response to the transmitted message from a neighbouring radio node, indicating that it has available radio resources adapted to the parameters contained into this message, for ordering to the radio access means of its radio node to create the service with the corresponding chosen QoS requirements.

The device according to the invention may include additional characteristics considered separately or combined, and notably :
- it may be arranged for ordering to the radio access means of its radio node to transmit a message comprising a first dedicated field comprising the parameters representative of the chosen service QoS requirements requested for the end-to-end connection;
- it may be arranged for ordering to the radio access means of its radio node to transmit a message comprising a second dedicated field comprising a value representative of a local downstream radio link usage ratio;
- it may be arranged for ordering to the radio access means of its radio node to transmit a message intended for requesting from a neighbouring radio node the creation of a dummy service with the parameters it comprises in order to determine its local radio resource availability near its radio access means, without service implementation;
- it may be arranged i) when its radio node has received a message comprising service parameters from a neighbouring radio node, for ordering to the radio access means of its radio node to transmit a message of the same type and comprising the service parameters to its own neighbouring radio nodes, in order to determine if radio resources adapted to the parameters are available on each radio link existing between these radio nodes, and ii) when its radio node has received a response to the transmitted message from a neighbouring radio node, indicating that it has available radio resources adapted to the parameters contained into the message, for ordering to the radio access means of its radio node to create the service with the corresponding chosen QoS requirements;
   ➢ it may be arranged, when its radio node has received a response to its message concerning a service with chosen QoS requirements from a neighbouring radio node, for ordering to the radio access means of its radio node to create the service with the corresponding chosen QoS requirements;
- it may be arranged, when the radio access means of its radio node does not have available radio resources adapted to the parameters contained into a received message, for ordering to this radio access means to do not answer to the received message.

The method and the device presented above are well adapted to on-demand routing protocols such as AODV (Ad-hoc On Demand Distance Vector).

Other features and advantages of the invention will become apparent on examining the detailed specifications hereafter and the appended drawings, wherein:
- figure 1 schematically illustrates an example of ad-hoc radio network comprising four radio nodes, each equipped with an example of embodiment of a device according to the invention and to which user radio communication equipments may be coupled,
- figure 2 schematically illustrates the exchange of messages (M) between the radio nodes of the ad-hoc radio network illustrated in figure 1,
- figure 3 schematically illustrates the exchange of responses (R) between some of the radio nodes of the ad-hoc radio network illustrated in figure 1, consecutively to the reception of a message (M) according to the invention,
- figure 4 schematically illustrates the establishment of an end-to-end connection (P) between two user radio communication equipments through a route defined by radio nodes of the ad-hoc radio network illustrated in figure 1, which have been chosen according to the method of the invention.

The appended drawing may serve not only to complete the invention, but also to contribute to its definition, if need be.

The invention aims at offering a method intended for establishing end-to-end connections, for a service defined by chosen quality of service (QoS) requirements, between radio communication equipments (Ti) through an ad-hoc radio network.

As mentioned before one means here by "ad-hoc radio network" a radio network comprising autonomous radio nodes (Nj) having both routing capabilities (L3) and radio access capabilities (L2) and having to discover by themselves the network topology. In the following description it will be considered as example that the ad-hoc radio network is an ad-hoc meshed radio network, such as a WiMAX network for instance. But the invention is not limited to this type of ad-hoc radio network. It could be also a LTE network, for instance.

Moreover, one means here by "radio communication equipment (Ti)" a terminal, device or apparatus which is capable of exchanging radio messages with at least one other communication equipment through a radio communication network and by means of a radio communication module (for instance a WiMAX communication module). So, it may be a laptop, a mobile (or cellular) telephone, or a personal digital assistant (PDA) having a radio communication module, for instance.

In the following description it will be considered as example that the radio communication equipments Ti (here i = 1 or 2) are mobile telephones.

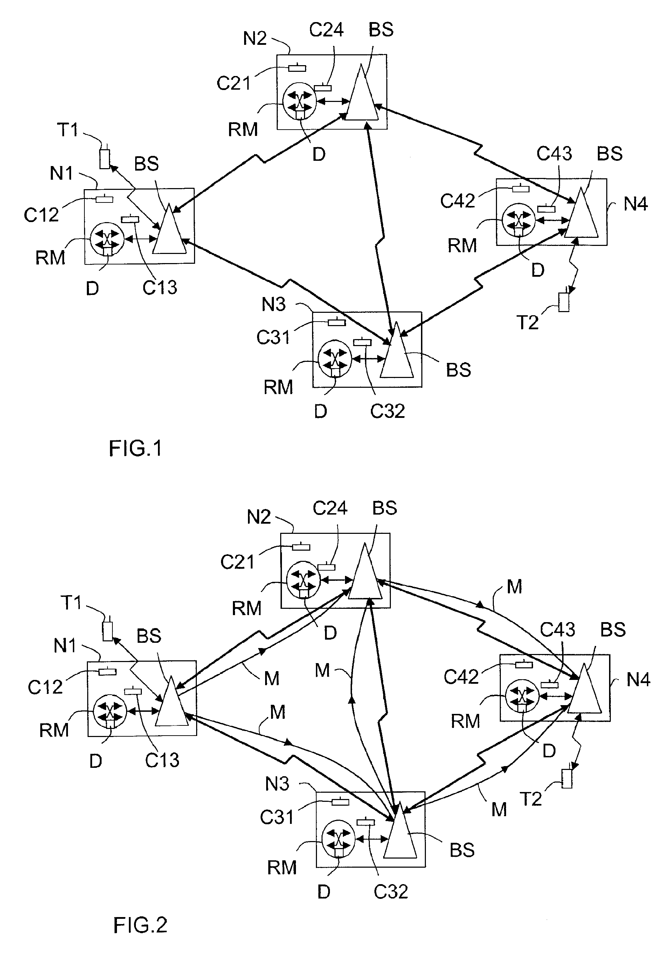

A non limiting example of ad-hoc meshed radio network, hereafter named "network", is schematically illustrated in figure 1. Such a network comprises autonomous radio nodes Nj (here j = 1 to 4, but the number of nodes Nj must be only equal to or greater than 2) each comprising a routing means (or router) RM and a radio access means BS connected together through a wired connection.

A radio access means BS is a communication node including a base station and its controller.

Each (radio) node Nj has its own dedicated radio channel. So, a radio access means BS is arranged for allowing users of mobile telephones Ti locked on the radio channel of its node Nj to communicate therebetween, but also for communicating with neighbouring nodes Nj' (j' ≠ j) through dedicated radio communication equipments Cjk co-located to node Nj and locked to the radio channel of the neighbouring nodes Nj'.

In order a node Nj be capable of transmitting a radio message received by its radio access means BS, intended for a mobile telephone Ti that is connected to it, and transmitted in a first radio channel that is different from its own dedicated (second) radio channel, it has to comprise, as illustrated, a radio communication equipment Cjk locked onto this first radio channel and connected to its routing means RM through a wired connection. Such a radio communication equipment Cjk (here k = 1 to 4) can be a customer premises equipment (CPE).

A routing means RM is intended for routing a radio message, which i) has been received by the radio access means BS of its node Nj, ii) is intended for a mobile telephone Ti that is connected to it, and iii) has been transmitted in a first radio channel that is different from its own dedicated (second) radio channel, to the radio communication equipment Cjk which is locked onto this first radio channel. A routing means RM is further intended for routing a radio message, which i) comes from a radio communication equipment Cjk locked onto a first radio channel (different from the dedicated (second) radio channel of its node Nj), and ii) is intended for a mobile telephone Ti that is connected to its node Nj (and therefore locked onto the second radio channel), to the radio access means BS of its node Nj, in order it could be transmitted to this mobile telephone Ti onto the second radio channel.

The invention proposes a method allowing to establish an end-to-end connection between radio communication equipments Ti through the ad-hoc radio network. This method is implemented each time a first node (for instance N1) receives a request from a first mobile telephone (for instance T1) which requests an end-to-end connection for a service defined by chosen QoS requirements with a second mobile telephone (for instance T2) accessible through a second node (for instance N4).

It is important to note that the second mobile telephone concerned by the end-to-end connection is not necessarily connected directly to the second node Nj of the network. Indeed it could be connected to a radio access network of a communication network to which the second node is connected.

It is also important to note that the request is received by the radio access means BS of the first node N1, and then communicated to the routing means RM of this first node N1 to be processed.

The method according to the invention comprises three main steps.

A first main step (i) consists in generating into the first node N1 a message M which comprises parameters representative of the chosen service QoS requirements defined into the received request, then in transmitting this message M from the first node N1 to each of its neighbouring nodes (here N2 and N3), and at least those located between the first (source) N1 and second (destination) N4 nodes, by means of an on-demand routing protocol.

For instance, the on-demand routing protocol is AODV (defined in RFC 3561 of IETF - Ad-hoc On Demand Distance Vector). But it could be also OLSR or RSVP, for instance. In the following description it will be considered as example that the on-demand routing protocol is AODV. So the message M is an adaptation of the AODV message named RREQ (resource request).

AODV is well adapted to networks comprising few nodes Nj (typically less than 10 nodes and at maximum 30 nodes) because this protocol consumes a small bandwidth and remains sufficiently rapid to allow a good protection of the network.

Such a message M is intended for determining if radio resources adapted to the parameters that it contains are available on a radio link existing between the transmitting node Nj (here N1) and the receiving node Nj" (here N2 or N3). Preferably the message M is intended for requesting from the receiving node Nj" (here N2 or N3) the creation of a dummy (or fake) service with the parameters it comprises. One means here by "dummy service" a service which only aims at determining the local radio resource availability of the radio access means BS of the receiving node Nj", without implementing any real service.

The downlink radio resources availability in a node Nj can be easily determined by the radio access means RM of this node Nj. Indeed, this radio access means BS knows every service flow that it is serving.

Basically the radio access means BS holds all the existing communications it has granted previously and knows the radio link quality with the radio communication equipments (or CPE) Cjk through the signal to noise ratio measurements. Therefore it has all the information to decide whether it can serve a new request of communication or not. The radio access means software has a state machine that can be stopped just before the resource reservation and after the check of resource availability.

A message M is generated by the radio access means BS of the first node N1 on request of its routing means RM. For this purpose, and as illustrated, the invention proposes to equip the routing means RM with a device D.

It is important to note that a device D according to the invention may be part of, or coupled to, a routing means RM. So, such a device D can be made of software modules or electronic circuit(s) (or hardware modules) or else a combination of hardware and software modules.

The device D is notably arranged, when a request (for a service) has been received by its routing means RM, for ordering to the radio access means BS of its node Nj to transmit a message M, comprising the parameters representative of the chosen service QoS requirements, to its neighbouring nodes Nj", by means of an on-demand routing protocol (here AODV).

For instance a message M (here of the RREQ type) comprises a first dedicated field which comprises the parameters representative of the chosen service QoS requirements requested into the received request for the end-to-end connection to establish. This first dedicated field can be similar to the field named "flowSpec" used into some messages of the protocol RSVP. It is important to note that the first dedicated field is an additional field which is added to a standard RREQ message by the transmitting radio access means BS on request of the device D. So, the radio access means BS of the nodes Nj must be adapted in order to be capable of adding such a first dedicated field to a standard RREQ message.

When a neighbouring node Nj" (here N2 or N3) receives a message M with its radio access means BS, the later communicates this message M to its routing means RM where it is processed by its device D. For instance, the device D reads the content of the first dedicated field to determine the parameters of the requested service, then it determines near the radio access means BS of its node Nj" if it has available radio resources capable of implementing the requested service defined by the determined parameters.

If the radio access means BS has available radio resources adapted to the parameters contained into the received message M, the device D orders to this radio access means BS to transmit a response R to the node Nj (here N1) having transmitted this message M, by means of the on-demand routing protocol (here AODV). This response R is intended for informing the node Nj (here N1) that the neighbouring node Nj" (here N2 or N3), to which it had previously transmitted a message M, has available radio resources for the requested service and therefore is ready to participate to a new route.

When the on-demand routing protocol is AODV the response R can be the standard response named RREP (resource response).

If the radio access means BS does not have available radio resources adapted to the parameters contained into the received message M, the device D preferably orders to this radio access means BS to do not answer to this received message M. So, if the node Nj (here N1) does not receive a response to a message M it has previously transmitted to one of its neighbouring node Nj" (here N2 or N3), in a chosen time interval, it considers that it will not be possible to use the radio link between this neighbouring node Nj" and itself in order to implement the requested service.

When the routing means RM has received a message M, its device D also orders to the radio access means BS of its node Nj" to transmit a message M of the same type than the one received (and therefore comprising the parameters representative of the chosen service QoS requirements), to its own neighbouring nodes Nj"', by means of the on-demand routing protocol (here AODV). It may also forward such a received message M instead of generating a new one.

As illustrated in figure 2, this message transmission (or forwarding) is reproduced in any node Nj" or Nj"' of the network, except in the second node Nj' (here N4), in order to determine if radio resources adapted to the parameters contained into the message M are available on each radio link existing between the network nodes N1 to N4.

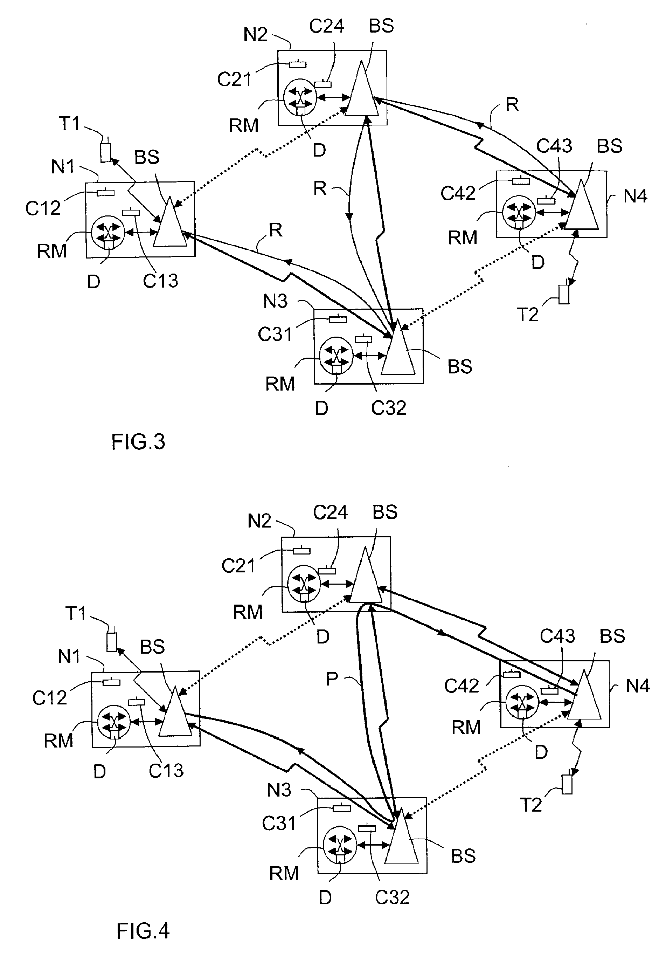

In the same way, and as illustrated in figure 3, each time a network node Nj' (here N4), Nj" (here N2 or N3) or Nj"' has received a message M from a preceding neighbouring node, either it transmits a response R to this preceding neighbouring node to inform it that it has available radio resources for the requested service and therefore is ready to participate to a new route, or it does not answer to this received message M to inform the preceding neighbouring node that it does not have available radio resources for the requested service and therefore can not participate to a new route.

In the non limiting example illustrated in figure 3, the node N4 transmits a response R to the node N2, the node N2 transmits a response R to the node N3, and the node N3 transmits a response R to the node N1. So the three radio links between respectively N4 and N2, N2 and N3, and N3 and N1 can be used to establish the requested end-to-end connection between the first T1 and second T2 mobile telephones. In figure 3, the radio links which can be used to establish the requested end-to-end connection are continuous lines, while the radio links which can not be used to establish the requested end-to-end connection are dotted lines.

It is important to note that the protocol AODV allows a selection of the RREQ messages received by a node Nj. This selection may be based on the arrival time: the first RREQ message arriving on a routing means port is the only one taken into account, the others RREQ messages concerning the same connection request and received onto the other ports of the considered routing means RM being discarded.

A second main step (ii) of the method according to the invention consists in defining a (new) route between the first Nj (here N1) and second Nj' (here N4) nodes through the nodes Nj" (here N3 and N2) offering radio links with radio resources adapted to the parameters of the requested service.

The definition of the new route is not carried out into the first node N1 or into an other network equipment. In fact the new route is automatically built by each node having available radio resources for a requested service. More precisely, when a node Nj has received a response R to its message M (which concerns a service with chosen QoS requirements) from a neighbouring node Nj", its device D requests the creation of this service with the corresponding chosen QoS requirements from its radio access means RM. This means that each node Nj having received a response R allocates to the requested service radio resources adapted to its QoS requirements.

A third main step (iii) of the method according to the invention consists in establishing the end-to-end connection P between the first T1 and second T2 mobile telephones through the nodes of the new route defined in the second main step (ii), i.e. through the nodes having allocated radio resources to the requested service. Such an end-to-end connection P is illustrated in figure 4.

If a network node Nj participating to an end-to-end connection P receives an error message concerning the service associated to this connection P, its device D may order to its radio access means BS (by means of an appropriate command) to delete locally this service. When the on-demand routing protocol is AODV the error message can be the standard error message named RERR (resource error).

When the device D of a routing means RM become aware of the fact that no packet is sent over a route to which belongs its node Nj, it may order to the radio access means BS of this node Nj (by means of an appropriate command) to delete locally the service associated to this route.

It is important to note that the invention concerns any type of service flow creation, and notably when the mobile telephone Ti is switch-on or dynamically on service request (for instance for a VoIP call), and is applicable to both terminal and network initiated QoS flows.

Moreover, in case where there exists at least one alternative route to the route defined in the second main step (ii) for a service, it is possible to implement a load balancing of this service between this route and at least one existing alternative route. This may increase the robustness to fluctuating situations at particular nodes Nj. It is important to note that services having a traffic descriptor with a PIR (Peak Information Rate) non equal to zero and a CIR (Committed Information rate) non equal to zero are not concerned by load balancing. Indeed, as soon as the CIR is non equal to zero one does not try to implement a load balancing, but one tries only to find a path able to support the CIR. The load balancing is useful for best effort traffics (i.e. with CIR = 0) in order to give them more chance to be supported.

To allow for such a load balancing the device D may order to the radio access means BS of its node Nj to insert into a message M to be transmitted a second dedicated field which comprises a value representative of a local downstream radio link usage ratio.

The radio link usage ratio can be expressed as a percentage. For instance a ratio of 100 % means that the link is not overbooked (indeed it may be overbooked with PIR traffic).

For instance the radio link usage ratio can be retrieved directly from the radio access means BS.

For instance, the radio link usage ratio can be taken into account during the selection phase of the messages M (RREQ). Indeed, when a node Nj" receives several messages M, each comprising a second dedicated field (with a radio link usage ratio), it is possible to select the message M having the lowest radio link usage ratio and then to forward only this selected message M to the neighbouring nodes Nj"' (the other one being not forwarded). In this case, a timer may be used during each message selection phase to minimize the end-to-end connection establishment duration.

The invention is not limited to the embodiments of method, device and radio node described above, only as examples, but it encompasses all alternative embodiments which may be considered by one skilled in the art within the scope of the claims hereafter.

## Claims

1. Method for establishing an end-to-end connection between radio communication equipments (Ti) through an ad-hoc radio network comprising radio nodes (Nj) having routing capabilities and radio access capabilities, **characterized in that**, when a first one (Nj) of said radio nodes receives a request from a first radio communication equipment (T1), requesting an end-to-end connection for a service defined by chosen QoS requirements with a second radio communication equipment (T2) accessible through a second radio node (Nj'), it comprises the steps of:
i) transmitting a message comprising parameters representative of said chosen service QoS requirements from said first radio node (Nj) to its neighbouring radio nodes (Nj") located between said first (Nj) and second (Nj') radio nodes, then from these neighbouring radio nodes (Nj") to their respective neighbouring radio nodes (Nj"') till reaching said second radio node (Nj'), by means of an on-demand routing protocol, in order to determine if radio resources adapted to said parameters are available on each radio link existing between these radio nodes (Nj, Nj", Nj"', Nj'),
ii) defining a route between said first (Nj) and second (Nj') radio nodes through said radio nodes (Nj", Nj"') offering radio links with radio resources adapted to said parameters, and
iii) establishing said end-to-end connection between said first (T1) and second (T2) radio communication equipments through the radio nodes of said defined route.

2. Method according to claim 1, **characterized in that** said messages to be transmitted comprise a first dedicated field comprising said parameters representative of the chosen service QoS requirements requested for said end-to-end connection.

3. Method according to one of claims 1 and 2, **characterized in that** said messages to be transmitted comprise a second dedicated field comprising a value representative of a local downstream radio link usage ratio.

4. Method according to one of claims 1 to 3, **characterized in that** said message to be transmitted is intended for requesting from the receiving radio node (Nj) the creation of a dummy service with the parameters it comprises in order to determine its local radio resource availability near its radio access capabilities, without service implementation.

5. Method according to one of claims 1 to 4, **characterized in that**, when a radio node (Nj"') having received a message from an other radio node (Nj") has available radio resources adapted to the parameters contained into said message, it transmits a response to said other radio node (Nj") by means of said on-demand routing protocol, in order to inform it that it is ready to participate to a new route, and, when a radio node (Nj"') having received a message from an other radio node (Nj") does not have available radio resources adapted to the parameters contained into said message, it does not answer to the message transmitted by said other radio node (Nj").

6. Method according to claim 5, **characterized in that**, when a radio node (Nj) has received a response to its message concerning a service with chosen QoS requirements from a neighbouring radio node (Nj"), it requests the creation of this service with the corresponding chosen QoS requirements from its radio access capabilities.

7. Method according to one of claims 1 to 6, **characterized in that**, when at least two routes have been defined to establish the end-to-end connection for said service, a load balancing of said service is carried out between said defined routes.

8. Device (D) for a radio node (Nj) having a routing means (RM) and a radio access means (BS) and belonging to an ad-hoc radio network (RN), **characterized in that** it is arranged i) when said radio node (Nj) receives a request from a first radio communication equipment (T1), requesting an end-to-end connection for a service defined by chosen QoS requirements with a second radio communication equipment (T2) accessible through an other radio node (Nj') of said ad-hoc radio network (RN), for ordering to said radio access means (BS) of its radio node (Nj) to transmit a message comprising parameters representative of said chosen service QoS requirements to its neighbouring radio nodes (Nj"), by means of an on-demand routing protocol, in order to determine if radio resources adapted to said parameters are available on each radio link existing between these radio nodes (Nj, Nj"), and ii) when its radio node (Nj) has received a response to said transmitted message from a neighbouring radio node (Nj"), indicating that it has available radio resources adapted to the parameters contained into said message, for ordering to said radio access means (BS) of its radio node (Nj) to create said service with the corresponding chosen QoS requirements.

9. Device according to claim 8, **characterized in that** it is arranged for ordering to said radio access means (BS) of its radio node (Nj) to transmit a message comprising a first dedicated field comprising said parameters representative of the chosen service QoS requirements requested for said end-to-end connection.

10. Device according to one of claims 8 and 9, **characterized in that** it is arranged for ordering to said radio access means (BS) of its radio node (Nj) to transmit a message comprising a second dedicated field comprising a value representative of a local downstream radio link usage ratio.

11. Device according to one of claims 8 to 10, **characterized in that** it is arranged for ordering to said radio access means (BS) of its radio node (Nj) to transmit a message intended for requesting from a neighbouring radio node (Nj") the creation of a dummy service with the parameters it comprises in order to determine its local radio resource availability near its radio access means (BS), without service implementation.

12. Device according to one of claims 8 to 11, **characterized in that** it is arranged i) when its radio node (Nj) has received a message comprising service parameters from a neighbouring radio node (Nj"), for ordering to said radio access means (BS) of its radio node (Nj) to transmit a message of the same type and comprising said service parameters to its own neighbouring radio nodes (Nj"'), in order to determine if radio resources adapted to said parameters are available on each radio link existing between these radio nodes (Nj, Nj"), and ii) when its radio node (Nj) has received a response to said transmitted message from a neighbouring radio node (Nj"'), indicating that it has available radio resources adapted to the parameters contained into said message, for ordering to said radio access means (BS) of its radio node (Nj) to create said service with the corresponding chosen QoS requirements.

13. Device according to claim 12, **characterized in that** it is arranged, when its radio node (Nj) has received a response to its message concerning a service with chosen QoS requirements from a neighbouring radio node (Nj"'), for ordering to said radio access means (BS) of its radio node (Nj) to create said service with the corresponding chosen QoS requirements.

14. Device according to one of claims 8 to 13, **characterized in that** it is arranged, when the radio access means (BS) of its radio node (Nj) does not have available radio resources adapted to the parameters contained into a received message, for ordering to said radio access means (BS) to do not answer to said received message.

15. Use of the method according to one of claims 1 to 7 and of the device according to one of claims 8 to 14 with an on-demand routing protocol chosen in a group comprising at least AODV.
